# EUROPEAN PATENT SPECIFICATION

(11) **EP 1 727 011 B1**
(45) Date of publication and mention of the grant of the patent: **08.08.2012**
(21) Application number: 06007121.4
(22) Date of filing: 04.04.2006
(51) Int. Cl.: G08G 1/123, G05D 1/02

(54) **Transportation system**
Transportsystem
Système de transport

(30) Priority: 26.05.2005 JP 2005153406
(43) Date of publication of application: 29.11.2006
(73) Proprietor: MURATA KIKAI KABUSHIKI KAISHA, Minami-ku Kyoto-shi Kyoto 601 (JP)
(72) Inventor: Hori, Kikuo, Kyoto-shi Kyoto, 6158157 (JP); Ueshima, Kazuro, Higashiyama-ku Kyoto-shi Kyoto, 6050823 (JP)
(74) Representative: Liedl, Christine

(56) References cited:
- WO-A-01/13138
- US-A1- 2002 055 823
- RUDE M: "COLLISION AVOIDANCE BY USING SPACE-TIME REPRESENTATIONS OF MOTION PROCESSES" AUTONOMOUS ROBOTS, KLUWER ACADEMIC PUBLISHERS, DORDRECHT, NL, vol. 4, no. 1, March 1997 (1997-03), pages 101-119, XP000688569 ISSN: 0929-5593

## Description

### Technical Field

The present invention relates to a transportation system according to the preamble of claim 1.

### Background Art

In a system including a plurality of guided vehicles, the guided vehicles report their current positions to a controller, respectively, and based on the reported information, the controller carries out assignment of transportation commands or the like (Japanese Patent No. 3,189,883). Further, a travel route for the guide vehicle is divided into a plurality of nodes. The controller provides permission to the guided vehicle in the unit of nodes, and the guided vehicle reports the current position in the unit of nodes.

However, the guided vehicles do not report the current positions at the same time. If a large number of guided vehicles report their current positions at the same time, for example, the communication traffic may exceed the communication capacity of the LAN. Further, the report of the current position of the guided vehicle does not always arrive at the controller at one time. For example, if any failure occurs in the middle of communication, the guided vehicle transmits the current position again. In this case, the transmission interface of the guided vehicle carries out retransmission because the receipt of the report of the current position cannot be confirmed. Therefore, the current position at the time of the retransmission is same as the current position when the failure occurred at the time of the previous transmission.

Other than the above system, in a conveyor system, transportation of articles by the guided vehicles as described above is carried out using conveyors. In the system, a transportation route is formed by a plurality of conveyors that can be turned on or off independently. In an area where congestion of articles occurs, by stopping the conveyor until the congestion is eliminated, the following article is prevented from pushing strongly against the leading article. The stopping operation or restarting operation of the conveyor causes a time loss, and applies a mechanical load to the conveyor. As a result, the lifetime of the conveyor is reduced.

US 2002/055823A1, forming the preamble of claim 1, discloses a travelling track on which a plurality of vehicles travel and which is divided into sections of various lengths. A collision avoidance unit acquires the present address of a section in which a vehicle runs and transforms the present address into a coordinate of one end of each section and a coordinate of the other end thereof. The coordinates are assigned to a time information in form of the present time provided by a time keeper being part of a centralized system control.

The time provided by the time keeper may, however, not be the correct time of acquiring an address. If there is a time delay in the transmission of a coordinate, then the coordinate is assigned to a delayed time and the corresponding vehicle may therefore have already performed an additional distance.

Rude M: " Collision avoidance by using space-time representations of motion processes" autonomous robots, Kluwer academic publishers, Dordrecht, NL, vol. 4, no. 1, March 1997, pages 101-119, XP000688569 ISSN: 0929-5593 refers to a decentralized collision avoidance system where robots move in a x, y -plane and are therefore not guided along a travel route. The position of a root at a time instant is described by the x, y -coordinates and the orientation of a robot. Robots can communicate by messages transmitted via a communication system containing time-stamped position data. This collision avoidance systems may therefore be described as a decentralized system:

WO 01/13138 A discloses a method employed by a aeroplane for detecting the risk of collision with at least one other aeroplane. Each aeroplane has a navigation system, which provides time-stamped position data relative to the surface of the earth.

### Summary of the Invention

The object underlying the present invention is to make it possible to keep track of the current status of a plurality of guided vehicles even if the status of the transportation apparatuses are reported at different timings, or even in the presence of the communication delay due to retransmission or the like,

to accurately evaluate distribution of the guided vehicles, and

to achieve efficient transportation by avoiding congestion of guided vehicles. This object is accomplished by the features defined in the characterizing portion of claim 1.

The estimation means estimates a current coordinate of the each guided vehicle, based on time series data of the coordinate along the travel route of each guided vehicle together with the time at the coordinate.

When each guided vehicle passes a branch in the travel route, the guided vehicle reports the direction of passing the branch to the controller together with the coordinate along the travel route.

The status of each guided vehicle and the time are inputted to the controller for at least estimating the current status. Even if the reports from the guided vehicles are transmitted at different timings, since the reporting time of each of the transportation apparatuses is known, the current status can be estimated by correcting the reported status based on the elapsed time up to the current time. Further, even if retransmission of the report is carried out due to the communication failure, it is also possible to estimate the current status.

In the case where the guided vehicles report their coordinates along travel routes to the controller, it is possible to determine the positions of the guided vehicles, and assign the transportation commands without any congestion efficiently.

In the case where the status evaluation means determines the distribution of guided vehicles on the travel routes, the controller or the guided vehicle can search its travel route based on the determined distribution for congestion avoidance.

In the case where the estimation means of the controller estimates the current coordinate of each guided vehicle based on the time series data of the coordinate of the guided vehicle along the travel route and the time, the current time can be estimated accurately.

In the case of a branch point, the current position cannot be identified only based on the traveling distance from the beacon. However, if the direction of passing the branch point is reported to the controller together with the data of the traveling distance , the coordinate of the guided vehicle can be identified.

### Brief Description of the Drawings

FIG. 1 is a plan view schematically showing the layout of main components of a guided vehicle system according to an embodiment.
FIG. 2 is a block diagram showing structure of a guided vehicle controller according to the embodiment and the content of communication with a guided vehicle.
FIG. 3 is a block diagram showing communication between the guided vehicle controller and the guided vehicle according to the embodiment, and processes carried out by the guided vehicle controller.

### Brief Description of the Symbols

| | | | |
|---|---|---|---|
| 2 | Guided vehicle system | 4 | Inter-bay route |
| 6 | Bypass route | 8,9 | Shortcut |
| 10, 11 | Intra-bay route | 12 | Beacon |
| 14-17 | Guided vehicle | 18 | Destination |
| 20 | Guided vehicle controller | 22 | LAN |
| 24 | Clock | 26 | Reception interface |
| 28 | Time series data memory unit | 30 | Layout map |
| 32 | Estimation engine for estimating current coordinate | | |
| 34 | Distribution information memory unit | | |
| 36 | Travel management unit | | |
| 38 | Transportation command assignment unit | | |

Hereinafter, an embodiment of the present invention will be described.

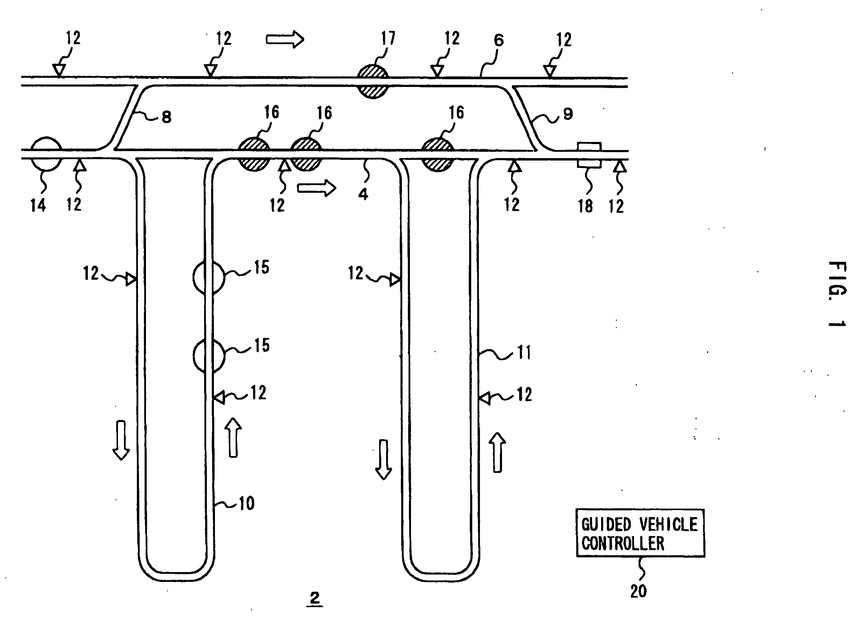

FIGS. 1 to 3 show a guided vehicle system according to the embodiment. In the embodiment, it is assumed that the guided vehicles are overhead traveling vehicles. A reference numeral 2 denotes the guided vehicle system. For example, the guided vehicle system 2 is provided in a clean room or the like. A reference numeral 4 denotes an inter-bay route, a reference numeral 6 denotes a bypass route, and reference numerals 8 and 9 denote shortcuts connecting the inter-bay route 4 and the bypass route 6. Intra-bay routes 10, 11 are connected to the inter-bay route 4. Beacons 12 are provided along the routes 4, 6, 10, and 11. Each of the guided vehicles 14 to 17 has a reader for reading the beacon 12 to recognize the current position. For example, the beacon 12 is a barcode or an RFID. The ID of the beacon itself is written in the barcode or the RFID such that the guided vehicles 14 to 17 can determine the coordinate based on the ID with reference to a map of the travel route. Otherwise, the coordinate on the travel route is written in the beacon 12 itself. The guided vehicles 14 to 17 travel in one-way direction indicated by arrows in FIG. 1. Further, the guided vehicles 14 to 17 may be equipped with a position recognition device for determining the distance from a mark or measuring the orientation by a laser so that the absolute position on the travel route can be determined directly.

At this time, it is assumed that the guided vehicle 14 travels from the current position in FIG. 1 to a destination 18. There are two travel routes for the guided vehicles 14. One of the travel routes extends straight along the inter-bay route 4, and the other of the travel routes utilizes the shortcuts 8, 9, and goes through the bypass route 6. Leading guided vehicles 16 are present in the inter-bay route 4, and a leading guided vehicle 17 is present in the bypass route 6. In the embodiment, the number of the leading guided vehicles 16 is large in comparison with the leading guided vehicle 17. A reference numeral 20 denotes a guided vehicle controller for assigning transportation commands, and providing instructions about the travel routes to the guided vehicles 14 to 17. Further, the guided vehicle controller 20 permits the guided vehicles 14 to 17 to travel through the shortcuts 8, 9, and controls traveling in merging sections or branch sections between the inter-bay route 4 and the intra-bay routes 10, 11. In terms of control, the shortcuts 8, 9 are regarded as combination of the branch section and the merging section.

When the guided vehicles 14 to 17 autonomously control traveling in the branch sections and the merging sections, the guided vehicle controller 20 does not have to implement the control for the branch sections and the merging sections. In the embodiment, the guided vehicle controller 20 provides instructions about the travel routes to the guided vehicles 14 to 17. Alternatively, the guided vehicles 14 to 17 may make inquiries to the guided vehicle controller 20 about the congestion status in the travel route, i.e., the number of guided vehicles present in each zone of the travel route, or distribution of guided vehicles in the travel route so as to autonomously determine the travel route, and avoid congestion.

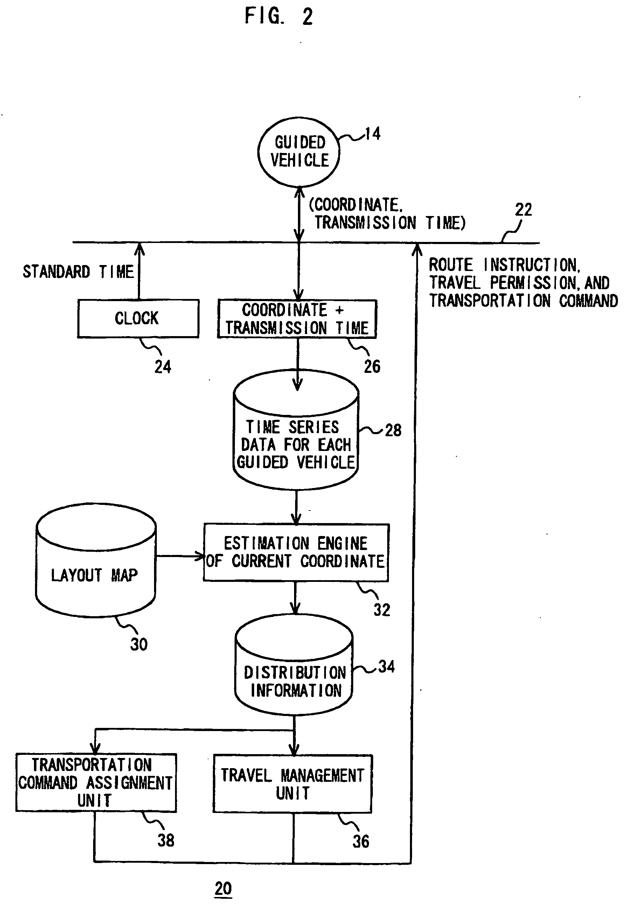

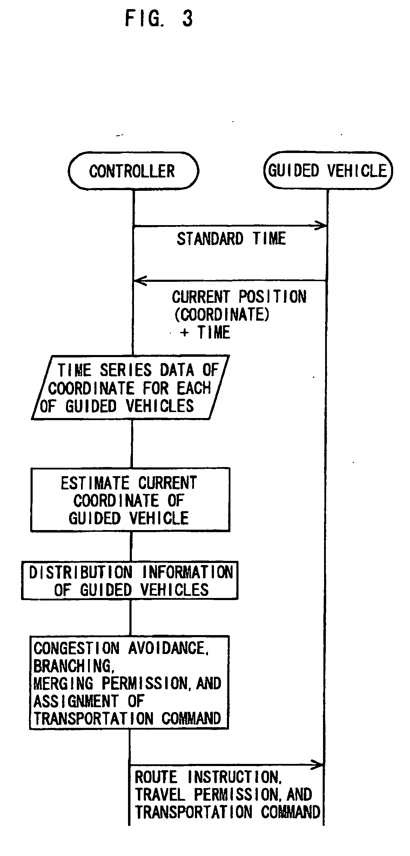

FIGS. 2 and 3 show communication between the guided vehicle 14 or the like and the guided vehicle controller 20, and structure of the guided vehicle controller 20. As an example, the process of communication with the guided vehicle 14 is illustrated. The process of communication with the other guided vehicles can be carried out in the same manner. A preference numeral 22 denotes a LAN of the guided vehicle, system. The guided vehicle 14 communicates with the guided vehicle controller 20 through the LAN 22. Further, communication between guided vehicles can be carried out through the LAN 22. The time of a clock 24 of the guided vehicle controller 20 is regarded as the standard time, and the time is notified to the LAN 22, e.g., at predetermined time intervals. The guided vehicle 14 receives the time for synchronizing the time of the guided vehicle 14 to the time of the guided vehicle controller 20.

For example, the guided vehicle 14 sends the coordinate of the current position and the time when the transmission is done to the LAN 22 at predetermine time intervals, and the guided vehicle controller 20 receives these items of data through a reception interface 26. The coordinate is positioned along the travel route in FIG. 1. For example, the coordinate is calculated by adding the coordinate of the last passed beacon and the traveling distance from the beacon determined by the encoder. If there is any branch section, it is not possible to determine the coordinate of the guided vehicle 14 only by the traveling distance from the beacon. Therefore, by adding data of the branching direction, such as branching to the left, straight forward, or branching to the right, the coordinate on the travel route is identified. The time used herein is the transmission time or the time of determining the coordinate, and the change of the coordinate between the transmission time and the time of determining the coordinate is, e.g., 1 cm or less.

The reception interface 26 inputs the received coordinate and the transmission time to a time series data memory unit 28. Other than the time and the coordinate, status information such as occupied/vacant, or the destination designated by a transportation command may be added to the time series data. The time series data memory unit 28 independently stores each of the time series data, including the coordinate and the transmission time, of the each guided vehicle. The time series data is inputted to an estimation engine 32 for estimating the current coordinate. The engine 32 refers to a layout map 30 showing travel routes for estimating the current coordinate by extrapolation of the time series data. For example, using the speed between the recent two points and the period from the last transmission time to the current time, the current coordinate is estimated. Since the guided vehicle travels in one direction, when the guided vehicle is not in the branch section, the current coordinate can be determined from the layout map 30. Since permission to travel in the branch section is given from the guided vehicle controller 20 to the guided vehicle 14 or the like, the branching direction is known to the guided vehicle controller 20.

The current coordinate estimation engine 32 inputs the determined current coordinate to a distribution information memory unit 34. The distribution information memory unit 34 stores distribution information about the distribution of the current positions of guided vehicles. The accuracy of positions used in the distribution information may be lower than the accuracy of the coordinate determined by the estimation engine 32. The distribution information is constantly updated by the estimation engine 32. Based on the distribution information, a travel management unit 36 provides instructions about the travel route to the guided vehicle 14 for avoiding congestion. For example, in the case of FIG. 1, in the inter-bay route 4, three leading guided vehicles 16 are present between the current position of the guided vehicle 14 and the destination 18, and in the bypass route 6, one leading guided vehicle 17 is present between the current position of the guided vehicle 14 and the destination 18. Therefore, the guided vehicle 14 is instructed to travel into the bypass route 6 through the shortcuts 8 and 9. In this manner, the guided vehicles can travel without congestion. The instructions about the travel route may not be provided from the guided vehicle controller 20. Alternatively, the distribution information may be transmitted from the guided vehicle controller 20 to the guided vehicle 14 or the like such that the guided vehicle 14 can determine the travel route. The congestion avoidance algorithm is used when distribution of guided vehicles is determined, and the congestion avoidance algorithm itself is known.

In the branch section or the merging section, it is difficult to avoid interference between guided vehicles by autonomous control. Therefore, the guided vehicle controller 20 is used for providing permission to travel into the branch section or the merging section. The travel management unit 36 determines positions of other guided vehicles near the branch section or the merging section based on the information provided by the distribution information memory unit 34, and provides permission to travel into the branch section or the merging section. If the distribution of the guided vehicle 14 or the like along the travel route is determined, at the time of assigning a transportation command, it becomes easier to select the most efficient guided vehicle, and assign the transportation command to the selected guided vehicle. A transportation command assignment unit 38 refers to the distribution information stored in the distribution information memory unit 34, and assigns the transportation command to the guided vehicle.

In the conventional technique, each of the guided vehicles reports the current position to the guided vehicle controller 20 by dividing the travel route into a plurality of separate nodes. Basically, these nodes are used for the control in the branch section or the merging section. Since the length of the node is substantially equal to the length of the vehicle body, the accuracy of the current position reported by the guided vehicle is low. In contrast, in the embodiment, the coordinate on the travel route is reported, and the coordinate is based on the beacon 12. Therefore, the accuracy of the current position reported by the guided vehicle is high. Further, communication failures may occur between the guided vehicle and the guided vehicle controller through the LAN 22. In the conventional technique, after the guided vehicle reports the current position, if no confirmation is received from the controller, it is determined that there was a failure in reporting the current position, and the guided vehicle reports the current position again. In this case, since the current position is transmitted again due to the communication failure, the current position is not newly determined again. Thus, the current position that has already been determined is reported. Therefore, the current position received by the controller has the error corresponding to the delay of transmission.

In contrast, in the embodiment, the guided vehicle transmits the coordinate and the time. If communication fails, data of the beacon and the time is not rewritten, and transmitted again. However, the controller can obtain the information as to what time, and at which coordinate the guided vehicle was present. Basically, the obtained coordinates are coordinates in the past, at different points of time. Therefore, by extrapolation of the time series data obtained by combination of the coordinate and the time for each of the guided vehicles, the estimation engine can detect the coordinate at present, and the coordinate in the near future, e.g., in the period until the guided vehicle finishes the currently executing transportation command.

After the positions of the guided vehicles are estimated, it is possible to determine the distribution of guided vehicles on the travel route at present, and in the near future. After the distribution of guided vehicles is determined, for example, it becomes proven which route should be selected for efficiently avoiding congestion. If the positions of the guided vehicles near the branch section or the merging section have been found, it is possible to permit traveling into the branch section or the merging section so that the guided vehicle can travel in the branch section or the merging section while avoiding interference between the guided vehicles without causing any deadlock efficiently. Further, if the controller stores the data as to whether the respective guided vehicles are vacant or occupied, in consideration of such data together with the distribution data of the guided vehicles, assignment of the transportation command can be made efficiently.

## Claims

1. A transportation system having a plurality of guided vehicles (14-17) travelling along a travel route, a controller (20) of the vehicles, each vehicle having report means for transmitting the position coordinate of the vehicle along the travelling route to the controller, the controller having a store means for storing the position coordinate of each vehicle in form of time-series data, and search means for searching a travelling path along the travelling route so as to avoid congestion according to the distribution,
**characterised in that**
the controller (20) includes
a time-series data memory unit (28) receiving and storing the position coordinate of each vehicle transmitted to the controller together with the transmission time of the position coordinate and outputting these time-series data to an estimation engine (32) for estimating the current coordinate of a vehicle via referring to a layout map (30),
a distribution information memory unit (34) receiving the determined current position coordinate from the estimation engine (32) and storing distribution information about the distribution of the current positions of guided vehicles, and a travel management unit (36) providing based on the distribution information of the distribution information memory unit (34) instructions about the travel route to the guided vehicles (14) for avoiding congestion, and
since a guided vehicle travels in one direction when it is not in a branch section, the current coordinate can be determined from the layout map (30), and
when the controller (20) gives permission to a guided vehicle to travel in the branch section, the guided vehicle reports the direction of passing the branch section to the controller.

2. A transportation system according to claim 1
**characterised in that**
the guided vehicles (14-17) and the controller (20) communicate through a LAN (22) and that the controller (20) includes a standard time clock (24) notifying the time to the LAN at predetermined time intervals.

3. A transportation system according to claim 1 or 2
**characterised in that**
the estimation engine (32) estimates the current coordinate of a vehicle by extrapolation of the time series data.

## Patentansprüche

1. Transportsystem mit einer Vielzahl von geführten Fahrzeugen (14-17), die entlang einer Fahrstrecke fahren, einer Steuereinrichtung (20) der Fahrzeuge, wobei jedes Fahrzeug eine Berichteinrichtung zum Übertragen der Positionskoordinate des Fahrzeugs entlang der Fahrstrecke an die Steuereinrichtung aufweist, die Steuereinrichtung eine Speichereinrichtung zum Speichern der Positionskoordinate jedes Fahrzeugs in Form von Zeitreihendaten und eine Sucheinrichtung zum Suchen eines Fahrweges entlang der Fahrstrecke aufweist, um gemäß der Verteilung eine Stauung zu vermeiden,
**dadurch gekennzeichnet, dass**
die Steuereinrichtung (20) enthält:
eine Zeitreihendaten-Speichereinheit (28), welche die an die Steuereinrichtung übertragene Positionskoordinate jedes Fahrzeugs zusammen mit der Übertragungszeit der Positionskoordinate empfängt und speichert und diese Zeitreihendaten an eine Schätzeinrichtung (32) ausgibt, um die aktuelle Koordinate eines Fahrzeugs unter Bezugnahme auf einen Streckenplan (30) zu schätzen,
eine Verteilungsinformations-Speichereinheit (34), welche die bestimmte aktuelle Positionskoordinate von der Schätzeinrichtung (32) empfängt und Verteilungsinformationen über die Verteilung der aktuellen Positionen der geführten Fahrzeuge speichert, und
eine Fahrverwaltungseinheit (36), welche auf der Grundlage der Verteilungsinformationen der Verteilungsinformations-Speichereinheit (34) Anweisungen hinsichtlich der Fahrstrecke an die geführten Fahrzeuge (14) bereitstellt, um eine Stauung zu vermeiden, und,
da ein geführtes Fahrzeug in eine Richtung fährt, wenn es nicht in einem Abzweigabschnitt ist, die aktuelle Koordinate aus dem Streckenplan (30) bestimmt werden kann, und
dann, wenn die Steuereinrichtung (20) einem geführten Fahrzeug die Erlaubnis erteilt, in den Abzweigabschnitt zu fahren, das geführte Fahrzeug die Richtung des Durchlaufs durch den Abzweigabschnitt an die Steuereinrichtung berichtet.

2. Transportsystem nach Anspruch 1,
**dadurch gekennzeichnet, dass** die geführten Fahrzeuge (14-17) und die Steuereinrichtung (20) durch ein LAN (22) kommunizieren und dass die Steuereinrichtung (20) eine Standardzeituhr (24) aufweist, die in vorbestimmten Zeitintervallen die Zeit über das LAN mitteilt.

3. Transportsystem nach Anspruch 1 oder 2,
**dadurch gekennzeichnet, dass** die Schätzeinrichtung (32) die aktuelle Koordinate eines Fahrzeugs durch Extrapolation der Zeitreihendaten schätzt.

## Revendications

1. Système de transport ayant une pluralité de véhicules guidés (14 à 17) se déplaçant le long d'une route de déplacement, un dispositif de commande (20) des véhicules, chaque véhicule ayant des moyens de rapport pour transmettre la coordonnée de position du véhicule le long de la route de déplacement au dispositif de commande, le dispositif de commande ayant un moyen de stockage pour stocker la coordonnée de position de chaque véhicule sous la forme de données en séries temporelles, et des moyens de recherche pour rechercher un trajet de déplacement le long de la route de déplacement de manière à éviter une congestion selon la distribution,
**caractérisé en ce que**
le dispositif de commande (20) comprend
une unité (28) de mémoire de données en séries temporelles recevant et stockant la coordonnée de position de chaque véhicule transmise au dispositif de commande conjointement avec le temps de transmission de la coordonnée de position et délivrer ces données en séries temporelles à un moteur d'estimation (32) pour estimer la coordonnée courante d'un véhicule en se référant à une carte de tracé (30),
une unité (34) de mémoire d'informations de distribution recevant la coordonnée de position courante déterminée du moteur d'estimation (32) et stockant des informations de distribution sur la distribution des positions courantes de véhicules guidés, et
une unité (36) de gestion de déplacement fournissant, sur la base des informations de distribution de l'unité (34) de mémoire d'informations de distribution, des instructions sur la route de déplacement, aux véhicules guidés (14) pour éviter une congestion, et
comme un véhicule guidé se déplace dans un sens lorsqu'il n'est pas dans une section d'embranchement, la coordonnée courante peut être déterminée à partir de la carte de tracé (30), et lorsque le dispositif de commande (20) donne la permission à un véhicule guidé de se déplacer dans la section d'embranchement, le véhicule guidé rapporte le sens de passage de la section d'embranchement au dispositif de commande.

2. Système de transport selon la revendication 1,
**caractérisé en ce que**
les véhicules guidés (14 à 17) et le dispositif de commande (20) communiquent via un système LAN (22) et **en ce que** le dispositif de commande (20) comprend une horloge de référence (24) notifiant le temps au système LAN à intervalles de temps prédéterminés.

3. Système de transport selon la revendication 1 ou 2,
**caractérisé en ce que**
le moteur d'estimation (32) estime la coordonnée courante d'un véhicule par extrapolation des données en séries temporelles.
